# EUROPEAN PATENT APPLICATION

(11) **EP 3 777 982 A1**
(43) Date of publication of application: **17.02.2021**
(21) Application number: 18911550.4
(22) Date of filing: 19.07.2018
(51) Int. Cl.: A62C 27/00, A62C 31/03, A62C 37/00

(54) **COMPACT MOBILE ROBOTIC FIRE-EXTINGUISHING SYSTEM**

(30) Priority: 27.03.2018 RU 2018110854
(71) Applicant: Limited Liability Company "Trade Company "Pozhsnab", Moscow ob., g. Lyubertsy, 140004 (RU)
(72) Inventor: KOVALEV, Pavel Viktorovich, Borisov, 222120 (BY); PLOSKONOSOV, Aleksandr Vladimirovich, Moscow, 111531 (RU); KOVALEV, Nikolai Petrovich, Moscow, 111391 (RU); KHATSKEVICH, Dmitriy Anatol'evich, Borisov, 222516 (BY); FEDULOV, Dmitriy Sergeevich, Kurganskaya oblast, g. Kargapol'e, 541920 (RU); GUSEV, Ivan Aleksandrovich, Nizhegorodskaya oblast, r.p. Shatki, 607700 (RU)
(74) Representative: Friese Goeden Patentanwälte PartGmbB
(86) International application number: PCT/RU2018/000481
(87) International publication number: WO 2019/190348

(57) **Abstract**

The invention relates to a fire ground vehicles, namely, to small-sized mobile robotic fire extinguishing units to monitor extreme situations and conduct recovery operations in the hazardous area under extremely dangerous conditions and/or in inaccessible areas, including nuclear power plants. The technical result achieved by the claimed invention is to provide a supply of extinguishants with a flow rate of 15 to 20 l/s using a small mobile robotic fire extinguishing unit. This technical result is achieved due to the fact that a small-sized mobile robotic fire extinguishing unit includes a tracked assembly with the housing mounted on it, a control panel and a drive part with an accumulator battery inside the housing, a fire extinguishant feed element mounted on the housing with remote control capability, video surveillance system, as well as a connecting pipeline, the outlet of which is connected to the inlet of the fire extinguishant supply element, according to the declared solution, the connection pipeline is installed inside the housing, and its central axis is located in the vertical housing symmetry plane, while the inlet axis of the connecting pipe is located below at least by half the height of the small mobile robotic fire extinguishing unit with respect to the outlet axis of the fire extinguishant supply element, and the outlet of the connecting pipe is located in the center of the upper surface of the housing.

## Description

The invention relates to a fire ground vehicles, namely, to small-sized mobile robotic fire extinguishing units designed to monitor extreme situations and conduct recovery operations in the hazardous area under extremely dangerous conditions and/or in inaccessible areas, including nuclear power plants.

There is a known supporting fire extinguishing unit LUF 60 manufactured by RECHNER'S Löschsysteme GES.M.B.H., Austria, that can work under extremely dangerous conditions.

Supporting fire extinguishing unit LUF 60 is designed to extinguish fires in road and railway tunnels, in metro, garages, production and storage facilities. It is used as a stand-alone, remotely controlled unit.

The LUF 60 unit is equipped with a 140-horsepower (104 kW) industrial diesel engine, which provides the movement of the structure and the operation of a powerful blow machine, thereby generating water spray with a high cooling capacity. The LUF 60 unit mobility and flexibility is provided by a crawler track system, which allows the device to move up and down the stairs with a slope of up to 30°. A set of nozzles that generates water droplets are located in the front part of the extinguishant nozzle. The water feed is carried out through V-shaped underwater water pipes with a three-way valve, a water pump, a water filter and the corresponding pipes / hoses that supply water to the nozzles.

However, the well-known LUF 60 unit has large dimensions and mass and is designed only to extinguish fires.

There is also a known multifunctional robotic fire extinguishing unit (hereinafter referred to as "RFEU") of the middle class "EL'-4".

The total mass of the unit is 7200 kg, the LBH boundary dimensions of the unit are 3400x1900x1860 mm.

The multifunctional robotic fire extinguishing unit EL'-4 (hereinafter referred to as "MRFEU EL'-4") is designed to extinguish fires and eliminate man-made accidents under high temperatures, evolution of an explosion threat and fragment injury as well as under the conditions of building structure failure.

MRFEU EL'-4 is installed on the tracked assembly. The MRFEU EL'-4 movement is carried out driven by two fluid motors mounted on the rear towing sprockets. The main propulsion unit is a diesel engine, whereon a gearbox with hydraulic pumps feeding hydraulic systems, operating according to the open principle, is installed.

For the purpose of fire extinguishing, a water-foam fire extinguishing system is installed on the MRFEU EL'-4, which allows extinguishing with compact or sprayed water, as well as with low-expansion foam. The direction of water feed is managed by the executive body of the manipulator, which provides 5 degrees of freedom. MRFEU EL'-4 is remotely controlled through a remote operating panel, whose radius of action in open country is about 2000 meters.

The above-mentioned tracked robotic fire extinguishing units with heavy weight and sufficient characteristics for fire extinguishing have one drawback. The dimensions of the RFEU do not meet the requirements for extinguishing fires in compact premises. Being equipped with technological and other devices also limits the use of these equipment in compact rooms.

There is a known mobile fire unit (RF utility patent No. 84716), including a housing mounted on a self-propelled track platform and equipped with compartments for fire equipment, high-pressure self-contained pump, foam forming tank, water and foam communications for extinguishants, hydraulic gun with a system of simultaneous extinguishant feed, lighting mast with spotlights and suction hose. In addition, water and foam communications are located under the bonnet of the internal combustion engine, and in the rear part of the platform there is a steering gear and a hitch for transporting water or a foaming agent up to 500 liters.

The drawbacks of the famous mobile fire extinguishing unit are the need to start the internal combustion engine, as well as large dimensions.

There is a well-known mobile robotic fire extinguishing unit (patent of invention No. 2580779) (hereinafter referred to as "MRFEU") is a self-propelled vehicle comprising a housing, chassis, propulsion engine, onboard remote control and radiotelemetry system, a fire extinguishing system, an onboard video surveillance system, and a set of special equipment, including a water branch pipe monitor (fire turntable monitor) with remote control, as well as a diesel engine, hydraulic pumps, drive gear system and valves, fuel and oil tanks, accumulator battery which are all included in the power unit. The fire extinguishing system of this MRFEU contains fire fighting equipment, communications for extinguishant supplying, a centrifugal water pump with a hydraulic drive gear, connecting pipelines, tanks with water and foaming agents. The radio remote control system consists of an onboard control system with an antenna, an independent wearable operating panel and a mobile control unit with a remote control panel based on a personal computer with a joystick, wireless Wi-Fi network adapter with antennas, battery, receiver, video monitor placed in an escort car. The MRFEU video system incorporates waterproof high-resolution cameras with infrared illumination, a video surveillance antenna, a video signal switcher, a video signal transmitter. Moreover, a sound alarm, flashing signal beacons, lighting system, chassis self-irrigation system are located on the MRFEU housing, and the lighting system includes a carriage searchlight, front and rear headlights and clearance lights.

According to this invention, the chassis can be interchangeable with the possibility of installing a tracked assembly. Furthermore, MRFEU is additionally equipped with an obstacle detection system based on ultrasonic sensors installed in the front and rear of the unit housing, a voice warning system installed on the top of the unit housing, video cameras mounted in the headlights of the lighting system, and the headlights have protective grills and a cleaning system (wipers).

In case of failure of the remote control system, there is a backup wired system - an additional local push-button control panel.

It can reach the home station (fire source) under its own power, by road or air transport, by rail or by sea.

The known device is characterized by its versatility and smaller size (dimensions and weight), and can be used for fire extinguishing in closed premises, including buildings, industrial and / or underground galleries, elevators, tunnels, corridors and other confined places.

However, the well-known device is a structure with size and weight approaching the average passenger car. In this regard, the transportation of MRFEU to the fire source in confined places (for example, at a nuclear power plant) may be rather difficult. In addition, the transportation of MRFEU by road or air transport, or by rail or sea (as indicated in the specification) requires special accessways. Therefore, the drawbacks of the known device include large size and low maneuverability.

The technical solution chosen as a prototype is the mobile robotic unit for reconnaissance and fire extinguishing (MRURFE).

Mobile robotic unit for reconnaissance and fire fighting MRURFE is designed to eliminate man-made accidents and fires associated with the risk of personnel death and injury. MRURFE can supply a water-foam solution to the fire source from the fire-fighting water-foam module, supply a fire extinguishing solid substance (powder) from the fire-fighting powder module to the fire source, supply finely sprayed water through high-pressure hose to the fire source, and supply an air-mechanical foam of low expansion ratio through high-pressure hose or foam of high expansion ratio through a fire hose and high expansion foam generator mounted on the manipulator, carrying out substantive reconnaissance around the clock under smoggy condition.

The main element of the MRURFE is a mobile robot, which is a vehicle with its control and power supply systems. A manipulator, processing equipment, fire extinguishing equipment, etc. are mounted on the vehicle housing. The manipulator loading capacity is 30 kg. Depending on the fire extinguishing purposes, the MRURFE manipulator can be equipped with a set of interchangeable powder or water fire extinguishing modules, including a fire turntable monitor.

MRURFE is remotely controlled using a remote control at a distance of at least 2000 meters. The speed of MRURFE movement is 1 m/s. The time of continuous operation of the MRURFE is not less than 4 hours. The unladen weight of the MRURFE is 300 kg.

The main purpose of the MRURFE is conducting reconnaissance and extinguishing fires in their initial stage. Having a small reserve of its own fire extinguishants (if modules are available) or operating from an accompanying vehicle, the MRURFE is able to supply fire extinguishants in a small amount with a small flow rate of up to 1 1/s, which does not satisfy the necessary conditions for extinguishing large fires. Moreover, in the event of an increase in the amount of extinguishing agents supplied to a flow rate of 15 l/s and above, the pressure of the fire hose, effecting its connection with the manipulator, is sufficient for tilting the MRURFE or for unregulated changing the manipulator position and, accordingly, changing the direction of extinguishant supply.

The use of this unit allows to extinguish fire in compact premises. However, it does not effectively extinguish fire due to the small quantity of extinguishants supplied.

The task of the claimed invention is to increase the speed of fire extinguishing fire in inaccessible places due to supplying fire source, during reconnaissance operations, with fire extinguishants with increased consumption using a small-sized mobile robotic fire extinguishing unit of the lowest weight and increased maneuverability.

The technical result achieved by the claimed invention is to provide a supply of extinguishants with a flow rate of 15 to 20 l/s using a small mobile robotic fire extinguishing unit.

This technical result is achieved due to the fact that in a small-sized mobile robotic fire extinguishing unit, including a housing with a tracked assembly mounted on it, a control panel and a drive part with an accumulator battery inside the housing, a fire extinguishant feed element mounted on the housing with remote control capability, video surveillance system, as well as a connecting pipeline, the outlet of which is connected to the inlet of the fire extinguishant supply element, according to the declared solution, the connection pipeline is installed inside the housing, and its central axis is located in the vertical housing symmetry plane, while the inlet axis of the connecting pipe is located below at least by half the height of the small mobile robotic fire extinguishing unit with respect to the outlet axis of the fire extinguishant supply element, and the outlet of the connecting pipe is located in the center of the upper surface of the housing.

In this case, the connecting pipe inlet can be located on the side surface of the housing.

The fire turntable monitor is principally used as an element for extinguishant supply, and this element for extinguishant supply may have a flow rate of 15 to 20 l/s.

The video surveillance system can be equipped with at least one camera and at least one IR imager. Moreover, the video surveillance system can be placed on the housing and/or inside the housing.

In addition, the remote control of the fire extinguishant supply element can be carried out with the help of a drive gear in the range from - 120 ° to + 120 ° in the horizontal plane and from -15° to + 75° in the vertical plane.

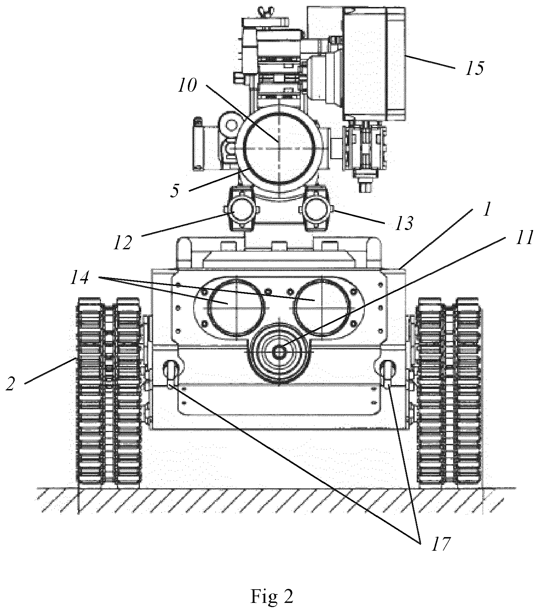

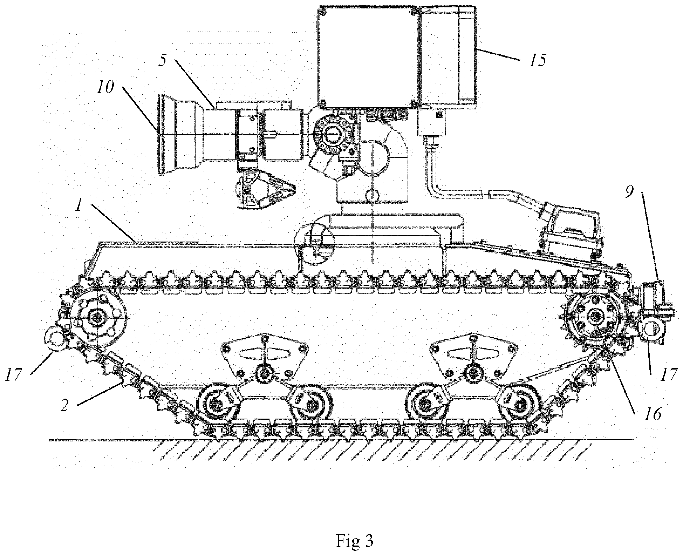

The claimed invention is illustrated by drawings explaining the subject matter of the invention, where Figure 1 shows a cross-section of the housing of a small mobile robotic fire extinguishing unit, that passes through the vertical plane of the housing symmetry; Figure 2 shows a front view of a small mobile robotic fire extinguishing unit, and Figure 3 shows a side view of a small mobile robotic fire extinguishing unit.

The proposed technical solution as a small-sized mobile robotic fire extinguishing unit is explained with a specific design described below, however, the given example is not the only possible one, but it clearly demonstrates the possibility of its achieving by this set of essential features of the claimed technical result.

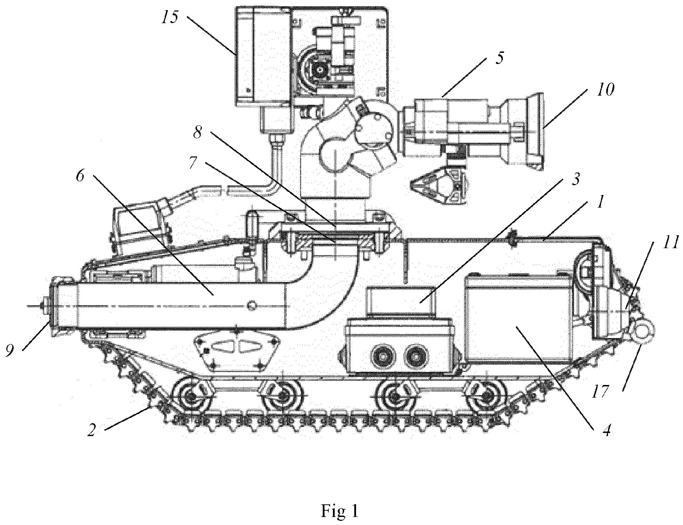

Small-sized mobile robotic fire extinguishing unit includes the housing 1 with the tracked assembly 2 installed on it. Control unit 3 and drive part (which is not shown in Figures) with accumulator battery 4 of small-sized mobile robotic fire extinguishing unit are located inside the housing 1. The fire extinguishant supply element 5 is installed on the housing 1 with the possibility of remote control. Small-sized mobile robotic fire extinguishing unit also contains the video surveillance system, connecting pipeline 6, the outlet 7 of which is connected to the inlet 8 of the fire extinguishant supply element 5. The connecting pipe 6 is installed inside the housing 1, and its central axis is located in the vertical plane of symmetry of the housing 1, which coincides with the cross section of the housing 1 shown in Fig. 1, while the connecting pipe 6 located inside the housing 1 ensures that power is not transmitted to the fire extinguishant feed element 5 from a fire-fighting fire hose (which is not shown in the figures) connected to a small-sized mobile robotic fire extinguishing unit, and the location of the connecting pipe 6 in a vertical plane of symmetry of the housing 1 is selected to ensure the weight balance between the opposite parts to the vertical plane of symmetry of the housing 1.

The inlet axis 9 of the connecting pipe 6 is located with respect to the outlet axis 10 of the fire extinguishant supply element 5 is below by half the height of a small-sized mobile robotic fire extinguishing unit. However, the specified distance is chosen from half the height to the integer value of the height of the small-sized mobile robotic fire extinguishing unit, which is due to the following: the lower the inlet 9 of the connecting pipe 6 is located relative to the outlet 10 of the fire extinguishant supply element 5, the smaller, including lateral, tilting forces arise in a small-sized mobile robotic fire extinguishing unit when pressure is transferred to it from a fire hose (which is not shown in the figures). The outlet 7 of the connecting pipe 6 is located in the center of the upper surface of the housing 1, because when the outlet 7 of the connecting pipeline 6 is otherwise located, for example, near the edge of the upper surface of the housing 1, the tilting efforts of the small-sized mobile robotic fire extinguishing unit increase due to the effort reverse to the direction of the jet stream of fire extinguishants supplied through the outlet 10 of the fire extinguishant supply element 5, since the tilting moment lever coinciding with the axis of the fire extinguishant supply element 5, is also shifted to the edge of the upper surface of the housing 1.

The inlet 9 of the connecting pipe 6 is located on the side surface of the housing 1, and can also be located below the housing 1 by means of the connecting pipe 6, removed from the housing 1 in order to reduce the tilting forces arising from the small-sized mobile robotic fire extinguishing unit when pressure is transferred from the fire hose (which is not shown in the figures). In this case, a force-feed head is used as the inlet 9 of the connecting pipe 6 to attach to the fire hose.

A fire monitor is used as the fire extinguishant supply element 5, with a remote control carried out by means of a drive gear (which is not shown in the figures) in the range from - 120° to + 120° in the horizontal plane and from - 15° to + 75° in the vertical plane.

The fire extinguishant supply element 5 provides the supply of extinguishing agents with a flow rate of 15 to 20 l/s over distances:
- 45 m with water continuous column;
- 30 m with sprayed substance (at a spray-cone angle of 300);
- 30 m with foam substance.

When applying extinguishing agents in an automated mode, it is possible to change the spray-cone angle of the sprayed jet of water from 0 to 120°.

The video surveillance system is equipped with the camera 11, located in the housing 1, and the camera 12 and a IR imager 13, mounted on the element 5 supplying extinguishing agents. The video camera 11 provides monitoring of the onward movement of a small-sized mobile robotic fire extinguishing unit. Whereas the video camera 12 and the IR imager 13 provide monitoring of the direction of rotation of the element 5 supplying extinguishing agents and allow to control the extinguishing of the fire. In addition, the video cameras 11 and 12 are complete with the ability to work in the darkness (night vision), and two LED lamps 14 are installed in the housing 1 to illuminate the work site or the route of movement. Moreover, flashing beacons (which are not shown in the figures) are installed on the housing 1, warning about the work and allow to easily detect small-sized mobile robotic fire extinguishing unit under the conditions of smoke or poor visibility.

Small-sized mobile robotic fire extinguishing unit is also equipped with its own irrigation system, necessary for protection against heat flow and temperature. The own irrigation system (which is not shown in the figures) is located on the housing 1. The irrigation system pipeline is connected to the fire extinguishant supply element 5, and during the supply of fire extinguishing agents through the fire extinguishing substance supply element 5 to the irrigation system pipeline and spray nozzles in the amount of two pieces (which are not shown in the figures), located on the upper part of the housing 1 on the right and left side, irrigation of the housing 1 occurs.

The control unit 3 of a small-sized mobile robotic fire extinguishing unit is equipped with the antenna 15 of transceiver for information transmitting from/to the command/control panel (is not shown in the figures), with which the operator controls at least the following elements: the movement of drive part of the tracked assembly 2, the position of the fire extinguishants supply element 5, supplying fire extinguishing agents, supplying extinguishants to the own irrigation system, the operation of the IR imager 13 and video cameras 11 and 12, including 14 LED lamps and flashing beacons. The control panel 3 has protection against gamma radiation (is not shown in the figure), that is necessary when working under conditions of radioactive effects.

The movement of the drive part of the tracked assembly 2 of a small-sized mobile robotic fire extinguishing unit is carried out by two gear motors (are not shown in the figures), driving the rear gears 16. The tracked assembly 2 provides for the movement of a small-sized mobile robotic fire extinguishing unit in conditions of compact premises and small debris. Maneuverability is also ensured due to the possibility of turning the unit through 360°. In view of the fact that the type of drive gear is electromechanical, its working efficiency is ensured under conditions of dense smoke, since the electromechanical drive, unlike the internal combustion engine, does not depend on the amount of oxygen in the air.

The above-mentioned electric motors, as well as the rest of the electricity consumers of the small-sized mobile robotic fire extinguishing unit, are powered from the rechargeable battery 4 located inside the housing 1.

The electromechanical drive and the presence of a tracked assembly allow the unit to move at a speed of 3 km/h, while overcoming obstacles at angles in the longitudinal direction up to 35°, and in the transverse direction up to 30°.

Small-sized mobile robotic fire extinguishing unit has a towing force of at least 80 kg, which allows laying fire hose lines for distances that provide pressure-flow characteristics of fire extinguishing agents.

This set of design features provides maximum functionality of the unit with minimum dimensions. The unit can, using a remote control, conduct scanning search and determine the location of the fire source and maneuver in the dangerous zone on an area comparable to the dimensions of the unit itself.

People can be searched in premises or places of accidents due to the use of the IR imager.

The mass of a small-sized mobile robotic fire extinguishing unit in curb condition is 110 kg, that ensures its transportation by personnel of fire and rescue units and is an advantage that increases its mobility.

Boundary dimensions (LxBxH mm) (1100x700x890 mm) allow the unit freely moving inside the premises having standard exits and entrances, as well as among the technological equipment of the object.

Layout solutions made it possible to place all the necessary elements in the design, while keeping weight on the sides of a small-sized mobile robotic fire extinguishing unit and to ensure that the center of gravity is located right in the middle.

Small-sized mobile robotic fire extinguishing unit is used to conduct reconnaissance and fire extinguishing at nuclear power plants, including under radiation, namely:
a) when used as an independent combat unit when conducting reconnaissance for the following purposes:
   - movement in the surveyed area along the route, remotely set by the operator's team in the online mode,
   - surveyed area lighting in the direction of travel;
   - transfer of the image to the operator's monitor in the direction of travel,
   - scanning of objects in predetermined planes (under the standard program) with a flame (fire source) detection,
b) when used as an independent fire fighting unit with a force-feed fire fighting line connected through the inlet 9 of the connecting pipe 6 (force-feed head) to tank apparatus, pumping station or hydrant for the following purposes:
   - movement in the surveyed area along the route, remotely set by the operator's team in the online mode,
   - surveyed area lighting in the direction of travel;
   - transfer of the image to the operator's monitor in the direction of travel,
   - scanning of objects in predetermined planes (under the standard program) with a flame (fire source) detection,
   - supplying water or foam/water mixture to a fire source, to a point specified by the operator.

Loading and transportation of the unit can be carried out in accordance with the regulatory documents in force on the railway, sea, road and air transport. For the purpose of convenient mechanized loading and unloading operations, lifting eye bolts 17 are provided on the unit, and there are also folding handles (are not shown in the figures) for manual transportation.

Small-sized mobile robotic fire extinguishing unit is made with increased maneuverability and informativeness, allows for the possibility of its quick delivery to the emergency center and evacuation, including manual fire extinguishing with folding handles.

## Claims

1. Small-sized mobile robotic fire extinguishing unit, including a housing with a tracked assembly mounted on it, a control panel and a drive part with an accumulator battery inside the housing, a fire extinguishant feed element mounted on the housing with remote control capability, video surveillance system, as well as a connecting pipeline, the outlet of which is connected to the inlet of the fire extinguishant supply element,**characterized in that** the connection pipeline is installed inside the housing, and its central axis is located in the vertical housing symmetry plane, while the inlet axis of the connecting pipe is located below at least by half the height of the small mobile robotic fire extinguishing unit with respect to the outlet axis of the fire extinguishant supply element, and the outlet of the connecting pipe is located in the center of the upper surface of the housing.

2. According to claim 1, small-sized mobile robotic fire extinguishing unit is **characterized in that** the connecting pipeline inlet is located on the side surface of the housing.

3. According to claim 1, small-sized mobile robotic fire extinguishing unit is **characterized in that** a fire monitor is used as an element for supplying fire extinguishing agents.

4. According to claim 1, small-sized mobile robotic fire extinguishing unit is **characterized in that** the fire extinguishing agent supply element has a flow rate from 15 to 20 l/s.

5. According to claim 1, small-sized mobile robotic fire extinguishing unit is **characterized in that** the video surveillance system is equipped with at least one video camera and at least one IR imager.

6. According to claims 1 and 5, small-sized mobile robotic fire extinguishing unit is **characterized in that** the video surveillance system is located on the housing and/or inside the housing.

7. According to claim 1, small-sized mobile robotic fire extinguishing unit is **characterized in that** the remote control of the fire extinguishant supply element is carried out with the help of a drive gear in the range from - 120° to + 120° in the horizontal plane and from - 15° to + 75° in the vertical plane.
